# EUROPEAN PATENT APPLICATION

(11) **EP 4 378 985 A1**
(43) Date of publication of application: **05.06.2024**
(21) Application number: 22210851.6
(22) Date of filing: 01.12.2022
(51) Int. Cl.: C08K 5/00, B32B 27/08, B32B 27/18, B32B 27/28, C08K 5/05, C08K 5/09, C08K 5/098, C08K 5/3492, C08K 5/5313, C08K 5/5333, C08K 5/5357

(54) **HALOGEN-FREE FLAME RETARDANT ACRYLIC POLYMERS FOR USE IN SHEET EXTRUSION AND MULTI INJECTION MOLDING PROCESSING**

(71) Applicant: Trinseo Europe GmbH, 8808 Pfaeffikon (CH)
(72) Inventor: FEI, Pengzhan, 8808 Pfaeffikon (CH); KAY, Nils, 8808 Pfaeffikon (CH); HOLM, Sascha, 8808 Pfaeffikon (CH); VANGENECHTEN, Koen, 8808 Pfaeffikon (CH)
(74) Representative: SSM Sandmair

(57) **Abstract**

The invention relates to a flame retardant (meth)acrylate composition combining an impact-resistant (meth)acrylic polymer (such as Solarkote^{®} resin from Trinseo) with specific levels of selected organic phosphinate and selected organic phosphorous flame retardants. The composition is halogen free, with superior flame performance, flowability and impact resistance. The composition of the invention is melt-processible and can be coextruded with a thermoplastic substrate material to obtain a multilayer structure, having a tough, impact resistant cap layer(s). The obtained multilayer structure can be further thermoformed into useful profiles and structures, such as the exterior housing of EV charging stations and car wash stations, automotive applications, aerospace, and building and construction applications.

## Description

### FIELD OF THE INVENTION

The invention relates to a flame retardant (meth)acrylate composition combining (meth)acrylic polymer with a synergistic flame retardant blend containing at least one organic phosphinate and at least one phosphonate ester. The (meth)acrylate composition is useful as a flame retardant cap layer in multi-layer polymer composites.

### BACKGROUND

(Meth)acrylic polymers (PMMA), such as Trinseo SOLARKOTE^{®} resins, has been widely used as a cap layer over many different substrate materials (e.g., ABS, PVC, HIPS) to improve weatherability, scratch and mar resistance, and aesthetics in many applications including decking, window profiles, and car interiors and exteriors.

However, PMMA is combustible, limiting its use in applications where flame resistance is required. There is a growing demand for a flame retardant (meth)acrylic cap layer having good processability and mechanical properties in the electrical, building and construction, and automotive fields, electric vehicle EV charging station and bath wall covering.

Flame retardant compounds for use in thermoplastics are well known. Most of these involve iodine and/or bromine compounds, such as aliphatic and aromatic bromine compounds, as for styrenic resins as described in US 2012-0184638, or a compound based on antimony. The problem with these flame retardants is that they tend to have toxicity issues, and with the recommended usage levels of 5-30 weight percent, these flame retardants adversely affect the physical properties (such as tensile strength) of the polymer.

Non-halogenated flame retardants for use in thermoplastics are also known, such as phosphonic acid derivatives (WO2018/137883), organic phosphorous-containing compounds with hindered amines (EP3002311), and dialkylphosphinic salts (EP 1544206). Acrylates are not described as the thermoplastic in these references.

EP1777257B1 describes the use of phosphinate flame retardants in (meth)acrylic polymers, with a UL-94 V-1 rating obtained for a 3.2 mm thickness sample. The reference describes the use of the flame-retardant (meth)acrylate as a top layer coextruded over acrylonitrile-butadiene-styrene (ABS). The total thickness of the multilayer sheet was 3 mm with flame-retardant (meth)acrylate layer thickness of 0.3 mm. The flame performance of the obtained multilayer sheet is similar to the substrate material.

Increased levels of flame retardant can improve the flame resistance of a (meth)acrylic thermoplastic. However, increased level of flame retardant tends to adversely affect the physical and mechanical properties of the thermoplastic, including reduced melt flow, reduced elongation at break, and an increase in yellowness.

There is a need for improved flame retardancy in an acrylic capstock, without adversely affecting the physical properties of the (meth)acrylic polymer, and without the use of halogens or other toxic additives.

It has now surprising been found that a blend of organic phosphinate with low levels of phosphonate ester compounds provided a synergistic effect in PMMA, with improved flame resistance, flowability, and reduced yellowness index may be achieved. In one example, a formulation passed UL94 V-0 test at 1/8" thickness and UL94 V-1 test at 1/16" thickness. A co-extruded sheet of the novel flame-resistant PMMA composition over a PC/ABS substrate passed the UL-94 V-0 test. In one example, a 2% addition of a phosphonate ester to the organic phosphinate in a PMMA composition unexpectedly provided a flame retardant increase equal to an extra 4% of phosphinate, yet without a penalty to the physical and mechanical properties.

The present invention provides a flame-retardant PMMA that can be co-extruded over a thermoplastic substrate to produce a multilayer structure having superior flame performance (without halogenated flame retardants), impact resistance, flowability and weatherability. The obtained multilayer structure can be further thermoformed into useful profiles and structures, such as the exterior housing of EV charging stations and car wash stations, bath wall covering, automotive applications, sanitary, aerospace, and building and construction applications.

### DETAILED DESCRIPTION OF THE INVENTION

The (meth)acrylic flame-retardant composition of the invention is a blend of one or more (meth)acrylic polymers (PMMA), one or more organic phosphinate, one or more phosphonate esters, and optionally other additives.

### (Meth)acrylic polymer

(Meth)acrylic polymers, as used herein, include, but are not limited to, homopolymers, copolymers and terpolymers (meaning more than two different monomer units) comprising alkyl (meth)acrylates. Blends of two or more different (meth)acrylic polymers are also contemplated.

The alkyl methacrylate monomer is preferably methyl methacrylate, which makes up from 60 to 100 of the monomer mixture. 0 to 40 percent of other acrylate, methacrylate, and/or other vinyl monomers may also be present in the monomer mixture, The comonomers generally make up from 0.5 to 40 weight percent, preferably from 0.5 to 30 weight percent, and preferably from 2 to 20 weight percent of the (meth)acrylate copolymer. Other methacrylate, acrylate, and other vinyl monomers useful in the monomer mixture include, but are not limited to, methyl acrylate, ethyl acrylate and ethyl methacrylate, butyl acrylate and butyl methacrylate, iso-octyl methacrylate and acrylate, ethyl hexyl acrylate and methacrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers, styrene and its derivatives. Alkyl (meth) acrylic acids such as (meth)acrylic acid and acrylic acid can be useful for the monomer mixture. Small levels of multifunctional monomers as crosslinking agents may also be used. A preferred acrylic polymer is a copolymer of methyl methacrylate and 2-16 percent of one or more C₁-C₄ acrylates.

The (meth)acrylic polymer may be impact modified. Common impact modifiers useful in the invention include, but are not limited to, block copolymers, and core-shell impact modifiers. The core-shell impact modifier may have a soft-hard morphology, a hard core-soft-hard morphology, or similar other morphology. For many outdoor applications, a non-impact (meth)acrylic polymer could be too brittle for use, and an impact modified (meth)acrylic would be preferred.

The melt flow rate (MFR) of the (meth)acrylic polymer or the impact modified (meth)acrylic polymer of the invention is preferably greater than 0.6 g/10min, preferably greater than 0.8 g/10min, and more preferably greater than 1 g/10min when testing under 230°C/3.8kg. The (meth)acrylic polymer or the impact modified (meth)acrylic polymer of the invention further has a Vicat temperature preferably greater than 90°C, preferably greater than 95°C, and more preferably greater than 100°C when testing under 10N, and a Vicat temperature greater than 85°C, preferably greater than 90°C, and more preferably greater than 95°C when testing under 50N. The Tg of the (meth)acrylic polymer or the impact modified (meth)acrylic polymer of the invention is preferably greater than 90°C, preferably greater than 95°C, and more preferably greater than 102°C.

### Flame retardants

The invention requires a flame retardant blend of at least one organic phosphinate flame retardant and at least one phosphonate ester flame retardant.

The organic phosphinate flame retardant has the formula: 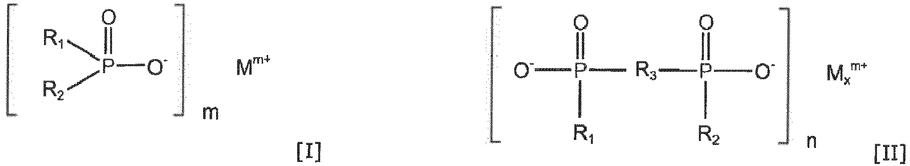 where:
R₁ and R₂ represent linear or branched C₁-C₆ alkyl and/or aryl groups. R₁ and R₂ may be the same or different;
R₃ is a linear or branched C₁-C₁₀ alkylene group, a C₆-C₁₀ arylene, an alkylarylene group, or an arylalkylene group;
M represents Mg, Ca, Al, Sb, Sn, Ge, Ti, Zn, Fe, Ze, Ce, Bi, Sr, Mn, Li, Na, or K;
m is an integer of from 1 to 4;
n is an integer of from 1 to 4;
x is an integer of from 1 to 4;

Two or more different flame retardants having Formula [I] and/or [II] may also be used.
R₁ and R₂ are preferably alkyl groups including, but not limited to, methyl, ethyl, n-propyl, n-butyl, tert-butyl, n-pentyl, and/or phenyl groups.
R₃ is preferably methylene, ethylene, n-propylene, isopropylene, n-butylene, tert-butylene, n-pentylene, n-octylene, or n-docecylene. It may also be phenylene, methylphenylene, ethylphenylene, tert-butylphenylene, methynaphthylene, pentylethylene, phenylpropylene or naphalene.

Advantageously, M denotes Ca, Al or Zn, and preferably M denotes Al.

Preferably the organic phosphinate flame-retardant agent of Formula (I) is one in which M denotes Al, and R₁ and R₂ both denote independently a C₁-C₆ alkyl group. Preferably R₁ and R₂ are both ethyl groups, or an ethyl group and a methyl group, as in Formulas [III] and [IV].

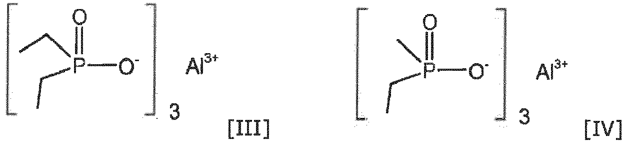

The weight % phoshorous in the phosphinate flame retardant is preferably greater than 16%, more preferably greater than 18%, more preferably greater than 20%, and most preferably greater than 22%.

Preferably the organic phosphinate flame retardant has a weight average particle size distribution D50 (measured by laser diffraction in acetone) of between 0.5 and 10 microns, advantageously between 1 and 5 microns. This particle size range provides good dispersion in the (meth)acrylic polymer.

The organic phosphinate flame retardant is present in the PMMA composition at from 20 to 45 parts by weight, advantageously from 25 to 45 parts by weight, more advantageously from 25 to 36 parts, and preferably from 29 to 32 parts, based on 100 parts of the (meth)acrylic polymer matrix.

The phosphonate ester used in the invention has the generic formula: 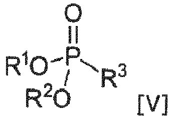 in which:
R¹ and R² are the same or different, and are chosen from linear or branched C₁-C₄ alkyl groups. R¹ and R² can be the same or different;
R³ is selected from linear or branched C₁-C₄ alkyl group, alkylene group, an alkylarylene group, or an arylalkylene group
Shorter chain R¹, R², and R³ tend to provide better flame retardancy, as the weight % of phosphorous in the phosphonate ester is higher. Methyl and ethyl groups are especially preferred.

The weight % phosphorous content of the phosphonate ester is preferably greater than 16%, preferably greater than 18%, more preferably greater than 20%, and most preferably greater than 22%.

The phosphonate ester flame retardant is present in the PMMA composition at from 0.1 to 17 parts by weight, advantageously from 0.2 to 12 parts by weight, based on 100 parts of the (meth)acrylic polymer matrix.

In one preferred embodiment, the phosphonate ester has formula [VI], with a phosphorous content of about 24 wt%.

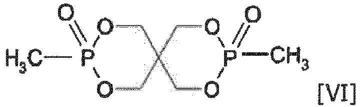

The phosphonate ester can be granular or in powder form. It is used at from 0.1 to 10 percent by weight, preferably from 0.5 to 5 percent by weight, and more preferably from 0.5 to 3 percent by weight, in the PMMA composition, based on the total weight of the composition.

The weight ratio of phosphonate ester to organic phosphinate in the PMMA composition is in a range of from 1:100 to 1:2, preferably from 1:48 to 1:8.

Optionally other non-halogenated flame retardants may be present at low levels of from 0 to 5 weight percent, and preferably from 0.1 to 3 weight percent of the total PMMA composition. Useful other flame retardants include, but are not limited to, one or more compounds selected from below
- monomeric or polymeric N-alkoxy hindered amine including but not limited to Flamestab^{®} NOR 116 (CAS# 191680-81-6),
- triazine derivatives,
- other phosphorous compounds such as organic phosphates and phosphine oxide,
- silicon compounds including but not limited to, silicates, zeolites, silicas, siloxane,
- magnesium compounds including but not limited to, magnesium hydroxide, magnesium carbonate, magnesium oxide, hydrotalcite, dihydrotalcite,
- calcium compounds, including but not limited to, calcium hydroxide, calcium oxide, calcium carbonate,
- zinc compounds, including but not limited to, zinc oxide, zinc hydroxide, hydrated zinc oxide
- aluminum compounds, including but not limited to, aluminum oxide, aluminum hydroxide, aluminum phosphate,
- titanium compounds including but not limited to, titanium oxide,
- antimony compounds including but not limited to, antimony trioxide, antimony tetroxide, antimony tartrate, and
- non-halogenated polymer including but not limited to, polycarbonate and polyvinylidene fluoride.

The levels of flame retardants and additives used in the (meth)acrylic composition is optimized to balance the required level of flame retardancy, yet to minimize the amount of flame retardants, to reduce degradation of physical and mechanical properties of the composition. The composition of the invention surprisingly allows for an increase in flame retardancy, without the typical loss of physical and mechanical properties.

### Other additives

The (meth)acrylic polymer composition of the present invention may optionally contain, in one or more layers, one or more typical additives for polymer compositions used in usual effective amounts, including but not limited to processing aids such as zinc stearate, stearic alcohol and stearic acid, stabilizers, plasticizers, fillers, coloring agents, pigments, antioxidants, antistatic agents, surfactants, toner, refractive index matching additives, additives with specific light diffraction, light absorbing, or light reflection characteristics, dispersing aids, radiation stabilizers, carboxylic acids such as lactic acid, oxalic acid, and acetic acid, and light modification additives, such as polymeric or inorganic spherical particles with a particle size between 0.5 microns and 1,000 microns.

The flame-retardant (meth)acrylic composition of the invention may be blended by means known in the art, such as in a twin screw extruder.

As shown in Tables 1-5, the flame-retardant (meth)acrylic composition of the invention provides improved flowability (MFR increase), improved flammability and reduced yellowness.

The flame-retardant (meth)acrylic polymer matrix, whether impact modified or not, has a melt flow rate (MFR) greater than 0.4 g/10min, preferably greater than 0.8 g/10min, and more preferably greater than 1 g/10min when testing under 230°C/3.8kg. The polymer matrix, impact modified or not, further has a Vicat temperature greater than 90°C, preferably greater than 95°C, and more preferably greater than 100°C when testing under 10N, and a Vicat temperature greater than 85°C, preferably greater than 90°C, and more preferably greater than 95°C when testing under 50N. The Tg of the flame-retardant (meth)acrylic polymer is preferably greater than 90°C, preferably greater than 95°C, and more preferably greater than 100°C.

The thermoplastic flame-retardant (meth)acrylic composition can be transformed into useful objects, profiles and sheets, by typical means, such as, but not limited to, extrusion, and injection molding. Useful objects of the composition include covers for electrical devices, profiles, automotive parts and thermoformable sheets.

### Multilayer composites

The flame-retardant (meth)acrylic composition of the invention may also be applied to a thermoplastic polymer, improving the resistance of the multi-layer composite to environmental factors, such as providing scratch and mar resistance, and UV resistance.

The flame-retardant (meth)acrylic polymer composition of the invention may be used as a cap layer on a thermoplastic substrate. A cap layer generally is much thinner than the structural plastic, typically being about 5 to about 25% of the total thickness of the multilayer structure comprising the capstock and structural plastic plies. For example, the thickness of the capstock can be about 0.05 to about 3 mm, preferably from 0.1 to 1 mm, whereas the thickness of the structural thermoplastic ply can be about 0.5 to about 20 mm, and preferably 1 to 10 mm.

Useful thermoplastic substrates for a multi-layer composite include, but are not limited to, saturated polyester (polyethylene terephthalate, polybutylene terephthalate), acrylonitrile/butadiene/styrene (ABS), styrene/acrylonitrile copolymer, acrylic/styrene/acrylonitrile (ASA) copolymer, polystyrene (PS), polycarbonate (PC), polypropylene oxide (PPO), polysulphone, polyvinyl chloride (PVC), chlorinated polyvinyl chloride (CPVC), expanded PVC, polypropylene, polyethylene, high impact polystyrene (HIPS). The thermoplastic substrate could also be a mixture or alloy of two or more thermoplastics, such as, but not limited to, PPO/PS, PC/ABS.

In a preferred embodiment, the substrate layer is a PC/ABS. It was found that PC/ABS can provide a higher heat resistance than ABS alone, as well as better mechanical properties, increased toughness, strength and dimensional stability.

The flame-retardant (meth)acrylic composition and the thermoplastic substrate composition may be combined into a multi-layer structure sheet or profile by means known in the art, such as, but not limited to coextrusion (or multi-extrusion), hot compression, multi-injection molding.

Optionally, a tie layer may be imposed between the (meth)acrylic layer and the thermoplastic substrate, for example to improve adhesion of the layers. The intermediate layer is thinner than the thermoplastic substrate, generally in the range of from 10 to 700 microns.

### Uses

The multi-layer composite of the invention is useful for producing thermoformable sheets by coextrusion. The sheets can be thermoformed into useful objects, including but not limited to, electric vehicle (EV) charging stations shells, car wash stations, automotive applications, automotive trim, aerospace applications, and building and construction applications such as bathroom wall coverings and shower stalls.

### EXAMPLES

### Materials:

Plexiglas^{®} HFI-10: impact modified PMMA (containing multilayer particles type impact modifier) marketed by Trinseo with melt flow rate (MFR) of 3.3 g/10min at 230°C/3.8kg and notched Izod impact of 1.0 ft-lb/in. Vicat temperature is 101.1 °C under 10N and 92.9 °C under 50N.

Plexiglas^{®} DR-101: impact modified PMMA (containing multilayer particles type impact modifier) marketed by Trinseo with melt flow rate (MFR) of 1.0 g/10min at 230°C/3.8kg and notched Izod impact of 1.1 ft-lb/in. Vicat temperature is 105.1 °C under 10N and 97.2 °C under 50N.

Exolit^{®} OP935: aluminum diethyl phosphinate sold by Clariant. Phosphorous content is about 24 wt%. Density is 1.35 g/cm3. Particle size D50 is about 2 micron.

Aflammit^{®} PCO900: organic phosphorus flame retardant sold by Thor. Phosphorous content is about 24 wt%.

Aflammit^{®} PCO960: organic phosphorus flame retardant sold by Thor. Phosphorous content is about 24 wt%. Aflammit^{®} PCO960 is non micronized version of PCO900.

Zinc Stearate: CAS number 557-05-1. Sold by Sigma-Aldrich.

FlameStab^{®} 116: CAS number 191680-81-6. FlameStab 116 is a triazine derivative sold by BASF. It is a monomeric N-alkoxy hindered amine with a melting range of 108-123 °C and specific gravity of 1.06 g/cm3.

Irgafos^{®} 126: Organo-phosphite sold by BASF. CAS number 26741-53-7. Phosphorus content 10.3 wt%.

Irgafos^{®} 168 : Organo-phosphite sold by BASF. CAS number 31570-04-4. Phosphorus content 4.8 wt%.

Emerge^{®} 7740: UL-94 V-0 rating flame retardant PC/ABS contains no halogenated flame retardant. MFR is 4.5 g/10min at 230°C/3.8kg.

### Test Methods

MFR: Melt flow rate of flame retardant acrylic polymers were measured at 230°C under the loading of 3.8 kg. (ASTM D1238-20)

Notched Izod: Notched Izod tests were conducted with an Instron Ceast Resil Impactor at room temperature. (ASTM D256-10(2018)). The "C" designates a complete break.

Tensile Properties (Tensile Strength, Elongation at Break and Tensile Modulus): Tensile tests were conducted with an Instron workstation. Crosshead Speed: 0.2"/min. (ASTM D638)

Vicat Temperature under 10N (and 50N): Vicat softening temperature were measured with an Instron HV6M workstation. (ASTM D1525-17e1). Samples were annealed at 80°C overnight then cooled to room temperature before testing.

Flexural Stress/Flexural Modulus: tests were conducted with an Instron 4201 workstation. Test speed 0.054 in/min. (ASTM D790-17)

Flame: Flame retardancy tests were conducted in an ATLAS HUVL horizontal/vertical flame chamber according to UL94 standard (Edition 6, March 28, 2013, ANSI approved April 1, 2022). V-0, V-1 and V-2 criteria are described in the table below. NR (no rating) indicate flame performance worse than V-2.

| **Criteria conditions** | **V-0** | **V-1** | **V-2** |
|---|---|---|---|
| Afterflame time for each individual specimen t1 and t2. | ≤10s | ≤30s | ≤30s |
| Afterflame time for any condition set (t1 plus t2 for the 5 specimens) | ≤50s | ≤250s | ≤250s |
| Afterflame plus afterglow time for each individual specimen after the second flame application (t2 + t3) | ≤30s | ≤60s | ≤60s |
| Afterflame or afterglow of any specimen up to the holding clamp | No | No | No |
| Cotton indicator ignited by flaming particles or drops | No | No | Yes |

Dart Drop: test was conducted with a BYK 5513 Gardner Impact Tester. (ASTM D4226-19e1)

YI-E313: Yellowness index was measured by a benchtop spectrophotometer from X-Rite. Model number Color i7. (ASTM E313-20)

### Example 1: Formulation and Properties:

The formulations listed in Table 1 below were mixed and compounded using a 27 mm twin screw extruder. Testing specimens were prepared with a Demag injection molding machine at 360-445 °F. Samples were tested, with the resulting properties shown in Table 1 below:

**TABLE 1**

| ***Formulation*** | **A (Comp.)** | **B (Comp.)** | **C (Comp.)** | **D (Inv.)** | **E (Inv.)** | **F (Inv.)** |
|---|---|---|---|---|---|---|
| Weight percent (total weight of composition) | **%** | **%** | **%** | **%** | **%** | **%** |
| Plexiglas^{®} HFI-10 | 84 | 80 | 76 | 82 | 78 | 74 |
| Exolit^{®} OP935 | 16 | 20 | 24 | 16 | 20 | 24 |
| Aflammit^{®} PCO960 | 0 | 0 | 0 | 2 | 2 | 2 |

| ***Properties*** | | | | | | |
|---|---|---|---|---|---|---|
| MFR @ 230C/3.8kg, g/10min | 2.43 | 1.95 | 1.58 | 2.96 | 2.71 | 2.25 |
| Notched Izod, ft-lb/in | 0.558 | 0.444 | 0.352 | 0.408 | 0.402 | 0.321 |
| Notched Izod Impact, J/m | 29.787 | 23.676 | 18.8 | 21.774 | 21.466 | 17.141 |
| Break Type | C | C | C | C | C | C |
| Tensile Strength, MPa | 38.05 | 37.52 | 38.03 | 38.49 | 38.36 | 38.44 |
| Elongation @ Break, % | 28.1 | 7.1 | 8.9 | 15.9 | 12.3 | 7.6 |
| Tensile Modulus, GPa | 2.48 | 2.83 | 3.05 | 3.22 | 2.895 | 3.455 |
| Vicat Temp. under 10N, °C | 104 | 105 | 106.1 | 100.3 | 100.5 | 101.1 |
| Vicat Temp. under 50N, °C | 96.5 | 97.6 | 98.5 | 92.7 | 93.1 | 93.5 |
| Tg (°C)/ DSC | 103 | 103.3 | 102.7 | 98 | 99.6 | 98.5 |
| UL94 @ 1/8" | NR | V-1 | V-0 | V-1 | V-0 | V-0 |
| UL94 @ 1/16" | NR | NR | NR | NR | V-1 | V-1 |
| YI-E313 | 20.21 | 26.05 | 29.4 | 13.17 | 16.32 | 19.22 |

### What the Examples demonstrate:

1) Comparing examples A, B and C, or D, E and F, with the same loading Aflammit^{®} PCO960 (0% or 2%), the higher the Exolit^{®} OP935 loading, the lower the MFR and Notched Izod Impact, and the better the flame performance and the higher the yellowness index.
2) Comparing examples A and D, or B and E, or C and F, with the same loading of Exolit^{®} OP935, the addition of 2% Aflammit^{®} PCO960 resulted in better flowability (higher MFR), better flame performance and a lower yellow index.
3) Comparing Examples D with B, or E with C, when 4% Exolit^{®} OP935 is replaced with 2% Aflammit^{®} PCO960, the flame performance remained the same or improved (Example C vs E at 1/16" thickness), and flowability and yellowness improved dramatically (much higher MFR and less yellowness index).

### Example 2: Formulation and Properties:

Formulations listed in Table 2 below were mixed and compounded using a 27 mm twin screw extruder. Testing specimens were prepared with a Demag injection molding machine at 360-445 °F. Samples were tested, with the resulting properties shown in Table 2 below:

**TABLE 2**

| ***Formulation*** | **G (Comp.)** | **H (Inv.)** | **I (Inv.)** | **J (Inv.)** |
|---|---|---|---|---|
| | **%** | **%** | **%** | **%** |
| Plexiglas^{®} HFI-10 | 78 | 77.5 | 76.5 | 76.25 |
| Exolit^{®} OP935 | 22 | 22 | 22 | 22 |
| Aflammit^{®} PCO900 | 0 | 0.5 | 0.5 | 0.5 |
| Zinc Stearate | 0 | 0 | 1 | 1 |
| FlameStab 116 | 0 | 0 | 0 | 0.25 |

| ***Properties*** | | | | |
|---|---|---|---|---|
| MFR @ 230C/3.8kg, g/10min | 1.96 | 2.16 | 2.76 | 3.33 |
| Notched Izod, ft-lb/in | 0.482 | 0.464 | 0.414 | 0.461 |
| Notched Izod Impact, J/m | 25.757 | 24.787 | 22.098 | 24.59 |
| Break Type | C | C | c | c |
| Tensile Strength, MPa | 35.45 | 36.16 | 31.61 | 30.7 |
| Elongation @ Break, % | 6.5 | 5.3 | 5.2 | 5.4 |
| Tensile Modulus, GPa | 2.26 | 2.27 | 2.08 | 2.00 |
| Vicat Temp. under 10N, °C | 104.5 | 103.3 | 101.3 | 98.8 |
| Vicat Temp. under 50N, °C | 93.8 | 93.1 | 90.9 | 89.1 |
| UL94 @ 1/8" | V-1 | V-1 | V-0 | V-0 |
| UL94 @ 1/16" | NR | NR | NR | NR |
| YI-E313 | 23.43 | 21.47 | 19.51 | 31.42 |

### What the Examples demonstrate:

1) Comparing examples G and H, adding 0.5% Aflammit^{®} PCO900 improved the flowability and reduced the yellowness (higher MFR and less yellowness index). The flame performance was not improved significantly.
2) However, by adding an extra 1% zinc stearate to formulation H, the flame performance was improved from V-1 to V-0 at 1/8" thickness. Meanwhile, the MFR was further increased and the yellowness index was reduced. This proved that the zinc stearate can be used in combination with Aflammit^{®} PCO900 and Exolit^{®} OP935 to enhance the flowability and flame performance and reduce yellowness index.

With an extra 0.25% Flamestab^{®} 116 compared to formulation I, the MFR was further increased. However, the flame performance remained the same and the yellowness index increased quickly.

### Example 3: Formulation and Properties:

Formulations listed in Table 3 below were mixed and compounded using a 27 mm twin-screw extruder. Plexiglas^{®} HFI-10 and Plexiglas^{®} DR101 are commercial grades from Trinseo Altuglas. Testing specimens were prepared with a Demag injection molding machine at 360-445 °F. Samples were tested, with the resulting properties shown in Table 3 below:

**TABLE 3**

| ***Formulation*** | **HFI-10 (Comp.)** | **DR101(Comp.)** | **K (Inv.)** | **L (Comp.)** |
|---|---|---|---|---|
| Weight percent by total weight of the composition | **%** | **%** | **%** | **%** |
| Plexiglas^{®} DR101 | | 100 | 74 | 76 |
| Plexiglas^{®} HFI-10 | 100 | | | |
| Exolit^{®} OP935 | | | 24 | 24 |
| Aflammit^{®} PCO900 | | | 2 | |

| ***Properties*** | **HFI-10 (Comp.)** | **DR101(Comp.)** | **K (Inv.)** | **L (Comp.)** |
|---|---|---|---|---|
| MFR @ 230C/3.8kg, g/10min | 3.3 | 1.1 | 0.93 | 0.43 |
| Notched Izod, ft-lb/in) | 1.004 | 1.04 | 0.362 | 0.387 |
| Notched Izod Impact, J/m | 53.58 | 55.62 | 19.335 | 20.632 |
| Break Type | C | C | C | C |
| Tensile Strength, MPa | 40.33 | 41.8 | 37.56 | 37.13 |
| Elongation @ Break, % | 91 | 71 | 4.3 | 4.3 |
| Tensile Modulus, GPa | 1.67 | 1.83 | 2.05 | 2.12 |
| Vicat (°C) under 10N | 101.1 | 105.1 | 107 | 112.4 |
| Vicat (°C) under 50N | 92.9 | 97.2 | 97.9 | 102.2 |
| Tg (°C)/ DSC | 101.5 | 106 | 102.3 | 107.4 |
| UL94 @ 1/8" | NR | NR | V-0 | V-0 |
| UL94 @ 1/16" | NR | NR | V-1 | NR |

### What the Examples demonstrate:

1) Comparing example K and L, when adding 2% PCO900 to the formulation containing 24% Exolit^{®} OP935 in Plexiglas^{®} DR101 PMMA matrix, MFR was increased from 0.4 to 0.9 g/10min, which means processibility was improved dramatically. Also, UL94 vertical flame test results was increased from NR to V-1 at 1/16" thickness.
2) Comparing example K and F (Table 1) or L and C (Table 1), with the same flame retardant(s) loading, when switching matrix PMMA from HFI-10 to DR101, the Vicat temperature was increased about 5 °C, and Tg was increased about 4 °C. This is due to the high heat stability of Plexiglas^{®} DR101 compared to Plexiglas^{®} HFI-10
3) All these improvements make example K a processable high heat resistance flame retardant PMMA with V-0 rating at 1/8" thickness and V-1 rating at 1/16" thickness.

### Example 4: Formulation and Properties:

Formulations listed in Table 4 below were mixed and compounded using a 27 mm twin screw extruder. Testing specimens were prepared with a Demag injection molding machine at 360-445 °F. Samples were tested, with the resulting properties shown in Table 4 below:

**TABLE 4**

| ***Formulation*** | **M (Inv.)** | **N (Comp.)** | **O (Comp.)** |
|---|---|---|---|
| Weight percent by total weight of the composition | **%** | **%** | **%** |
| Plexiglas^{®} HFI-10 | 76 | 76 | 76 |
| Exolit^{®} OP935 | 22 | 22 | 22 |
| Aflammit^{®} PCO900 | 2 | | |
| Irgafos^{®} 126 | | 2 | |
| Irgafos^{®} 168 | | | 2 |

| ***Properties*** | **M (Inv.)** | **N (Comp.)** | **O (Comp.)** |
|---|---|---|---|
| MFR @ 230C/3.8kg, g/10min | 2.30 | 1.83 | 1.80 |
| Notched Izod, ft-lb/in) | 0.342 | 0.326 | 0.377 |
| Notched Izod Impact, J/m | 18.24 | 17.379 | 20.147 |
| Break Type | C | C | C |
| Tensile Strength, MPa | 40.12 | 38.85 | 37.99 |
| Elongation @ Break, % | 3.7 | 4.7 | 6 |
| Tensile Modulus, GPa | 2.12 | 2.06 | 2.04 |
| Vicat (°C) under 10N | 103.2 | 102.5 | 105.8 |
| Vicat (°C) under 50N | 95.8 | 94.4 | 97.6 |
| UL94 @ 1/8" | V-0 | V-1 | V-1 |
| UL94 @ 1/16" | V-1 | NR | NR |

### What the Examples demonstrate:

Comparing example M and N or O, with the same loading of OP935, generic phosphate such as Irgafos^{®} 126 and Irgafos^{®} 168 do not improve MFR and flame performance of the compound like Aflammit^{®}PCO900 does. This may due to the unique chemical structure and high phosphorus content of Aflammit^{®} PCO900.

### Example 5: Formulation and Properties, Multi-layer Composite;

Three extruders (two for the flame retardant PMMA and one for the PC/ABS) and a triple manifold die were used to coextrude FR PMMA over the PC/ABS to produce multi-layer sheet samples. The extrudates from each extruder were spread then combined at the die and finalized by passing a cooling station with three rollers. The extrusion rates of each extruder were finely adjusted so the obtained multilayer sheets met the desired layer thickness (0.6 mm for the PMMA or the flame-retardant PMMA layer, and 2.4 mm for the PC/ABS layer). These sheet samples were then cut to make specimens for testing.

**TABLE 5**

| ***Formulation*** | **P (Comp.)** | **Q (Inv.)** |
|---|---|---|
| Altuglas^{®} HFI-10 | x | |
| Formulation E | | x |
| Emerge^{®} 7740 | x | x |

| ***Properties*** | **P (Comp.)** | **Q (Inv.)** |
|---|---|---|
| Flexural Stress, MPa | 88 | 93 |
| Flexural Modulus, MPa | 2408 | 2551 |
| Notched Izod, ft-lb/in | 1.803 | 1.517 |
| Notched Izod Impact, J/m | 96.253 | 80.956 |
| Izod break type | C | C |
| Flame, UL94 | NR | V-0 |
| Dart Drop, in-lb/mil | 1.64 | 1.62 |

### What the Examples demonstrate:

Example Q proved that co-extruded flame-retardant PMMA with PC/ABS was successful (the formulation was processable). Compared to example P (same PC/ABS with non-flame-retardant PMMA cap layer), the flame performance of the sheet was improved from NR to V-0. Meanwhile, the flexibility and impact resistance were only slightly reduced so it is still suitable for thermoforming and used for EV charging station housing, bathroom wall covering, etc.

## Claims

1. A flame-retardant (meth)acrylic polymer composition comprising per 100 parts by weight of (meth)acrylic polymer:
a. from 20 to 45 parts by weight of at one or more organic phosphinate flame retardants of formula [I] or [II]: 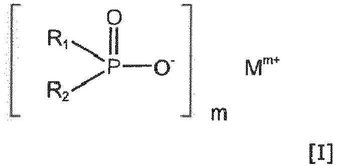 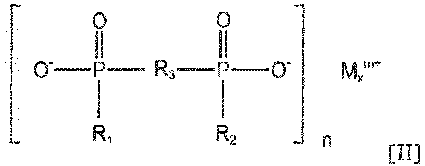 where:
R₁ and R2 represent linear or branched C₁₋₆ alkyl and/or aryl groups, and wherein
R₁ and R₂ can be the same or different;
R₃ is a linear or branched C₁-C₁₀ alkylene group, a C₆-C₁₀ arylene, an alkylarylene group, or an arylalkylene group;
M represents Mg, Ca, Al, Sb, Sn, Ge, Ti, Zn, Fe, Ze, Ce, Bi, Sr, Mn, Li, Na, or K;
m is an integer of from 1 to 4;
n is an integer of from 1 to 4;
x is an integer of from 1 to 4;
b. from 0.1 to 17 parts by weight of one or more phosphonate ester flame retardants having the formula [V]: in which: 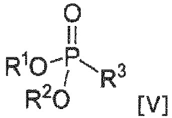
R¹ and R² are the same or different, and are chosen from linear or branched C₁-C₆ alkyl groups, and wherein R¹ and R² can be the same or different;
R₃ is selected from is a linear or branched C₁-C₁₀ alkyl group, alkylene group, a C₆-C₁₀ arylene, an alkylarylene group, or an arylalkylene group.
and wherein said (meth)acrylic polymer comprises at least 60 weight percent of methyl methacrylate monomer units.

2. The flame-retardant (meth)acrylic polymer composition of claim 1, wherein R₁ and R₂ are independently selected from the group consisting of methyl, ethyl, n-propyl, n-butyl, tert-butyl, n-pentyl, and phenyl groups.

3. The flame-retardant (meth)acrylic polymer composition of claim 1, wherein R₁ is ethyl and R₂ is either methyl or ethyl, M is Al, and the flame retardant has the Formula [III] or [IV]:

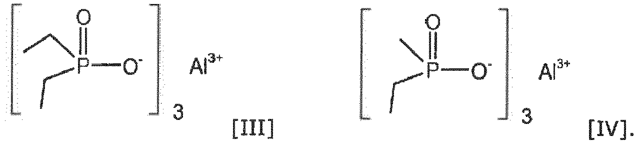

4. The flame-retardant (meth)acrylic polymer composition of claim 1, wherein the organic phosphinate flame retardant has a weight average particle diameter (D50) of from 0.5 and 10 micron.

5. The flame-retardant (meth)acrylic polymer composition of claim 1, wherein said phosphonate ester has the formula [VI]

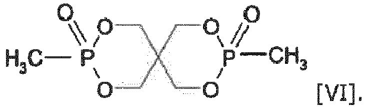

6. The flame-retardant (meth)acrylic polymer composition of claim 1, wherein the weight ratio of phosphonate ester to organic phosphinate in the PMMA composition is in the range of from 1:100 to 1:2.

7. The flame-retardant (meth)acrylic polymer composition of claim 1, wherein said (meth)acrylic polymer further comprises impact modifier.

8. The flame-retardant (meth)acrylic polymer composition of claim 1, wherein said (meth)acrylic polymer has a melt flow rate (MFR) greater than 0.6 g/10min, when testing under 230°C/3.8kg.

9. The flame retardant (meth)acrylic polymer composition of claim 1, wherein said (meth)acrylic polymer has a Vicat temperature greater than 90°C, when testing under 10N, and a Vicat temperature greater than 85°C, when testing under 50N.

10. The flame-retardant (meth)acrylic polymer composition of claim 1, wherein said composition further comprises additional flame retardants and additives selected from Flamestab^{®} NOR 116, zinc stearate, stearic alcohol, and stearic acid.

11. The flame-retardant (meth)acrylic polymer composition of claim 1, wherein said composition passes a UL94 test on a 1/8 inch thickness sample with a V-0 rating.

12. The flame-retardant (meth)acrylic polymer composition of claim 1, wherein said composition passes a UL94 test on a 1/16 inch thickness sample with a V-1 rating.

13. The flame-retardant (meth)acrylic polymer composition of claim 1, wherein said composition is in the form of an object, profiles or sheet.

14. The flame-retardant (meth)acrylic polymer composition of claim 13 wherein object, profile or sheet, is formed by extrusion, or injection molding.

15. A multi-layer polymer composite comprising:
a. at least one layer of the flame retardant (meth)acrylic polymer composition of claim 1,
b. at least one layer of a thermoplastic selected from the group consisting of :
saturated polyester, polyethylene terephthalate, polybutylene terephthalate,
acrylonitrile/butadiene/styrene (ABS), styrene/acrylonitrile copolymer,
acrylic/styrene/acrylonitrile (ASA) copolymer, polystyrene (PS), polycarbonate (PC), polypropylene oxide (PPO), polysulphone, polyvinyl chloride (PVC),
chlorinated polyvinyl chloride (CPVC), expanded PVC, polyethylene, polypropylene, high impact polystyrene (HIPS) and blends thereof,
wherein the layer exposed to the environment comprises the layer a) flame retardant (meth)acrylic polymer composition.

16. The multi-layer polymer composite of claim 15, wherein said thermoplastic is a PC/ABS blend.

17. The multi-layer polymer composite of claim 15, wherein said flame retardant (meth)acrylic polymer composition layer has a thickness of from 0.05 to 3.0 mm, and said thermoplastic layer has a thickness of from 0.5 to 20 mm.

18. The multi-layer polymer composite of claim 15, wherein said composite further comprises an intermediate tie layer between the flame retardant (meth)acrylic polymer composition layer and the thermoplastic layer.

19. The multi-layer polymer composite of claim 15, wherein said composite is formed by a process comprising coextrusion (or multi-extrusion), hot compression, or multi-injection molding.

20. The multi-layer polymer composite of claim 15, wherein said composite passed UL94 V-0 test at a total thickness of 3 mm with flame-retardant (meth)acrylic polymer layer thickness of 0.6 mm.

21. The multi-layer polymer composite of claim 15, wherein said multi-layer composite is part of an electric vehicle (EV) charging station, a car wash station, automotive application, automotive trim, aerospace application, building and construction application, bathroom wall covering, tub or shower stall.
